(19) Europäisches Patentamt / European Patent Office / Office européen des brevets

(11) **EP 4 254 042 A1**

(12) **EUROPEAN PATENT APPLICATION**

(43) Date of publication:
**04.10.2023 Bulletin 2023/40**

(21) Application number: **23158399.8**

(22) Date of filing: **24.02.2023**

(51) International Patent Classification (IPC):
***G02B 26/10*** *(2006.01)*

(52) Cooperative Patent Classification (CPC):
**G02B 26/101; G02B 26/105;** G02B 26/0858

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022051759**

(71) Applicant: **FUJIFILM Corporation**
**Tokyo 106-8620 (JP)**

(72) Inventors:
• **NAONO, Takayuki**
  **Ashigarakami-gun, Kanagawa 258-8577 (JP)**
• **AOSHIMA, Keisuke**
  **Ashigarakami-gun, Kanagawa 258-8577 (JP)**

(74) Representative: **HGF**
**HGF Limited**
**1 City Walk**
**Leeds LS11 9DX (GB)**

(54) **OPTICAL SCANNING DEVICE, DRIVING METHOD OF OPTICAL SCANNING DEVICE, AND DISTANCE MEASUREMENT DEVICE**

(57)     To obtain an optical scanning device, a driving method of an optical scanning device, and a distance measurement device capable of reducing a driving voltage for scanning a donut-shaped incident surface.

A driving controller applies a first driving signal $V_x(t)$ including two components of different frequencies $f_1$ and $f_2$ represented by the following equation (A) to a first actuator and a second driving signal $V_y(t)$ including components of the frequencies $f_1$ and $f_2$ represented by the following equation (B) to a second actuator.

$$V_x(t) = A_{x1}\sin(2\pi f_1 t) + A_{x2}\sin(2\pi f_2 t + \gamma_3)...(A) \qquad \text{(a)}$$

$$V_y(t) = A_{y1}\sin(2\pi f_1 t + \gamma_1) + A_{y2}\sin(2\pi f_2 t + \gamma_3 + \gamma_2)...(B) \qquad \text{(b)}$$

EP 4 254 042 A1

# FIG. 1

**Description**

**BACKGROUND OF THE INVENTION**

1. Field of the Invention

The present disclosure relates to an optical scanning device, a driving method of an optical scanning device, and a distance measurement device.

2. Description of the Related Art

In a field of light detection and ranging (LiDAR), an omnidirectional type that can obtain a 360° field of view has attracted attention. Some omnidirectional LiDAR devices are configured by combining a micro electro mechanical systems (MEMS) mirror and an omnidirectional lens. The LiDAR device using the MEMS mirror is lightweight and can be reduced in cost.

In the omnidirectional LiDAR device, the MEMS mirror needs to scan all over a donut-shaped incident surface of the omnidirectional lens with a light beam. As a technique for scanning a donut-shaped incident surface, a technique has been proposed in which a MEMS mirror performs a spiral scan such that a radius vector of a light beam changes linearly with time (refer to, for example, JP2017-173622A).

**SUMMARY OF THE INVENTION**

In the technique described in JP2017-173622A, a mirror portion is caused to swing in a sinusoidal shape at one frequency in each of two orthogonal axes, and an amplitude of the sinusoidal-shaped swing is modulated at a high speed so as to be within a frame rate with a phase difference between movements of the mirror portion in the two axes as 90° to perform the spiral scan.

However, in this technique, a high driving voltage is requested for scanning the donut-shaped incident surface by the spiral scan due to a slow response to the amplitude modulation or the like.

The present disclosure has been made in view of the above circumstances, and a purpose of the present disclosure is to provide an optical scanning device, a driving method of an optical scanning device, and a distance measurement device capable of reducing a driving voltage for scanning a donut-shaped incident surface.

An optical scanning device according to an aspect of the present disclosure comprises a mirror device that has a mirror portion, which is swingable around a first axis and a second axis intersecting each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion, and at least one processor. The processor applies a first driving signal $V_x(t)$ including two components of different frequencies $f_1$ and $f_2$ represented by the following equation (A) to the first actuator and a second driving signal $V_y(t)$ including components of the frequencies $f_1$ and $f_2$ represented by the following equation (B) to the second actuator to cause the mirror portion to excite main scanning, which is a sinusoidal swing vibration of the frequency $f_1$ around the first axis and the second axis and sub scanning, which is a sinusoidal swing vibration of the frequency $f_2$ around the first axis and the second axis,

$$V_x(t) = A_{x1}\sin(2\pi f_1 t) + A_{x2}\sin(2\pi f_2 t + \gamma_3)...(A)$$

$$V_y(t) = A_{y1}\sin(2\pi f_1 t + \gamma_1) + A_{y2}\sin(2\pi f_2 t + \gamma_3 + \gamma_2)...(B)$$

in the equations (A) and (B), a relationship of $f_1 > f_2$, $-\pi \leq \gamma_1, \gamma_2$, and $\gamma_3 \leq \pi$ is satisfied, and $\gamma_1$ and $\gamma_2$ are phase differences adjusted such that a phase difference $\gamma_4$ between the swing around the first axis and the swing around the second axis in the main scanning of the mirror portion and a phase difference $\gamma_5$ between the swing around the first axis and the swing around the second axis in the sub scanning of the mirror portion satisfy a relationship of $\gamma_4 = \gamma_5$, $\gamma_5 = \gamma_4 + \pi$, or $\gamma_5 = \gamma_4 - \pi$.

In the optical scanning device of the present disclosure, a maximum commitment number of the frequencies $f_1$ and $f_2$ may be an integer F, and $F \geq 10$.

Further, in the optical scanning device of the present disclosure, a relationship of $A_{x1} > A_{x2}$ may be satisfied in the equation (A), and a relationship of $A_{y1} > A_{y2}$ may be satisfied in the equation (B).

Further, in the optical scanning device of the present disclosure, in a case where two resonance frequencies in a resonance mode with a mirror tilt swing around the first axis are $f_{x1}$ and $f_{x2}$ ($f_{x1} > f_{x2}$) and two resonance frequencies in a resonance mode with a mirror tilt swing around the second axis are $f_{y1}$ and $f_{y2}$ ($f_{y1} > f_{y2}$), the following relationships of equations (C) to (F) may be satisfied.

$$|f_{x1} - f_1| < f_1/100...(C)$$

$$|f_{y1} - f_1| < f_1/100...(D)$$

$$|f_{x2} - f_2| < f_2/100...(E)$$

$$|f_{y2} - f_2| < f_2/100...(F)$$

A driving method of an optical scanning device according to an aspect of the present disclosure is a driving method of an optical scanning device including a mirror device that has a mirror portion, which is swingable around a first axis and a second axis intersecting each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion. The driving method comprises applying a first driving signal $V_x(t)$ including two components of different frequencies $f_1$ and $f_2$ represented by the following equation (A) to the first actuator and a second driving signal $V_y(t)$ including components of the frequencies $f_1$ and $f_2$ represented by the following equation (B) to the second actuator to cause the mirror portion to excite main scanning, which is a sinusoidal swing vibration of the frequency $f_1$ around the first axis and the second axis and sub scanning, which is a sinusoidal swing vibration of the frequency $f_2$ around the first axis and the second axis,

$$V_x(t) = A_{x1}\sin(2\pi f_1 t) + A_{x2}\sin(2\pi f_2 t + \gamma_3)...(A)$$

$$V_y(t) = A_{y1}\sin(2\pi f_1 t + \gamma_1) + A_{y2}\sin(2\pi f_2 t + \gamma_3 + \gamma_2)...(B)$$

in the equations (A) and (B), a relationship of $f_1 > f_2$, $-\pi \leq \gamma_1, \gamma_2$, and $\gamma_3 \leq \pi$ is satisfied, and $\gamma_1$ and $\gamma_2$ are phase differences adjusted such that a phase difference $\gamma_4$ between the swing around the first axis and the swing around the second axis in the main scanning of the mirror portion and a phase difference $\gamma_5$ between the swing around the first axis and the swing around the second axis in the sub scanning of the mirror portion satisfy a relationship of $\gamma_4 = \gamma_5$, $\gamma_5 = \gamma_4 + \pi$, or $\gamma_5 = \gamma_4 - \pi$.

A distance measurement device according to an aspect of the present disclosure comprises the optical scanning device according to any one of the above aspects, a light source that emits light to the mirror portion of the optical scanning device, a light receiving element that outputs a signal corresponding to received light, a deflecting optical member that deflects light reflected by the mirror portion of the optical scanning device in all directions, a beam splitter that guides light deflected by the deflecting optical member, reflected by an object to be measured, and reflected by the mirror portion to the light receiving element, and at least one processor. The processor derives a distance to the object to be measured based on a time difference between an emission timing of the light from the light source and an output timing of the signal from the light receiving element.

According to the present disclosure, the driving voltage for scanning the donut-shaped incident surface can be reduced.

**BRIEF DESCRIPTION OF THE DRAWINGS**

Fig. 1 is a schematic diagram of an optical scanning device.

Fig. 2 is a block diagram showing an example of a hardware configuration of a driving controller.

Fig. 3 is a schematic plan view of a MEMS mirror.

Fig. 4 is a diagram for describing a first deflection angle in a case where a mirror portion swings.

Fig. 5 is a diagram for describing a second deflection angle in a case where the mirror portion swings.

Fig. 6 is a diagram showing an example of a state where the mirror portion swings around a first axis in a case of main scanning.

Fig. 7 is a diagram showing an example of a state where the mirror portion swings around the first axis in a case of sub scanning.

Fig. 8 is a diagram showing an example of a state where the mirror portion swings around a second axis in a case of main scanning.

Fig. 9 is a diagram showing an example of a state where the mirror portion swings around the second axis in a case of sub scanning.

Fig. 10 is a diagram showing driving conditions of the MEMS mirror and measurement results of optical scanning.

Fig. 11 is a graph showing transitions of the first deflection angle and the second deflection angle in a time series in Example 1.

Fig. 12 is a diagram showing an orbit of light in Example 1.

Fig. 13 is a graph showing transitions of the first deflection angle and the second deflection angle in a time series in Example 2.

Fig. 14 is a diagram showing an orbit of light in Example 2.

Fig. 15 is a schematic diagram of a distance measurement device.

Fig. 16 is a diagram showing an example of a path of light reaching an object to be measured.

Fig. 17 is a diagram showing an example of a path of light reflected by an object to be measured.

## DESCRIPTION OF THE PREFERRED EMBODIMENTS

Hereinafter, embodiments for implementing the technique of the present disclosure will be described in detail with reference to drawings.

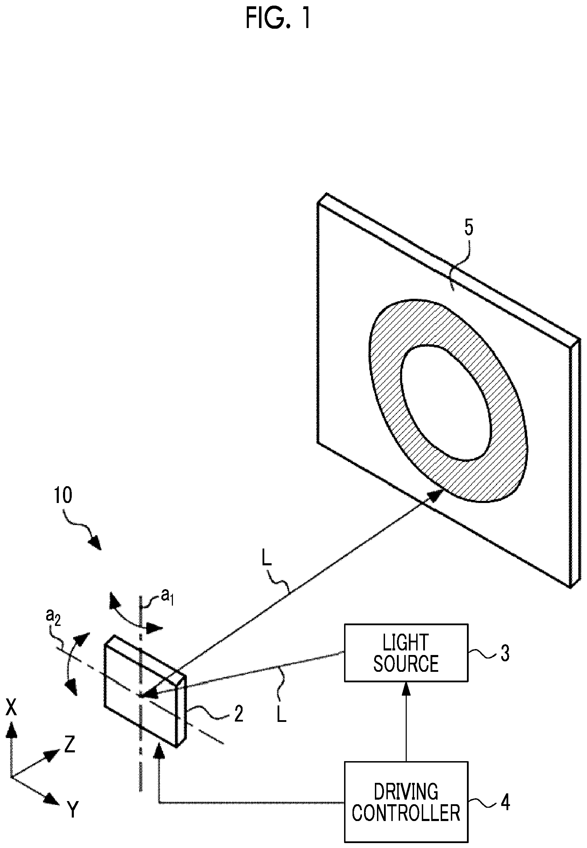

First, a configuration of an optical scanning device 10 according to the present embodiment will be described with reference to Fig. 1. As shown in Fig. 1, the optical scanning device 10 comprises a MEMS mirror 2, a light source 3, and a driving controller 4. In the optical scanning device 10, under control of the driving controller 4, a light beam L emitted from the light source 3 is reflected by the MEMS mirror 2 to perform optical scanning on a surface to be scanned 5. Although the details will be described below, the optical scanning device 10 according to the present embodiment performs the optical scanning on the surface to be scanned 5 in a donut shape. The donut shape referred to here means a shape of a portion surrounded by two concentric circles having different radii, as shown by a shaded portion in Fig. 1. The MEMS mirror 2 is an example of a "mirror device" according to the technique of the present disclosure.

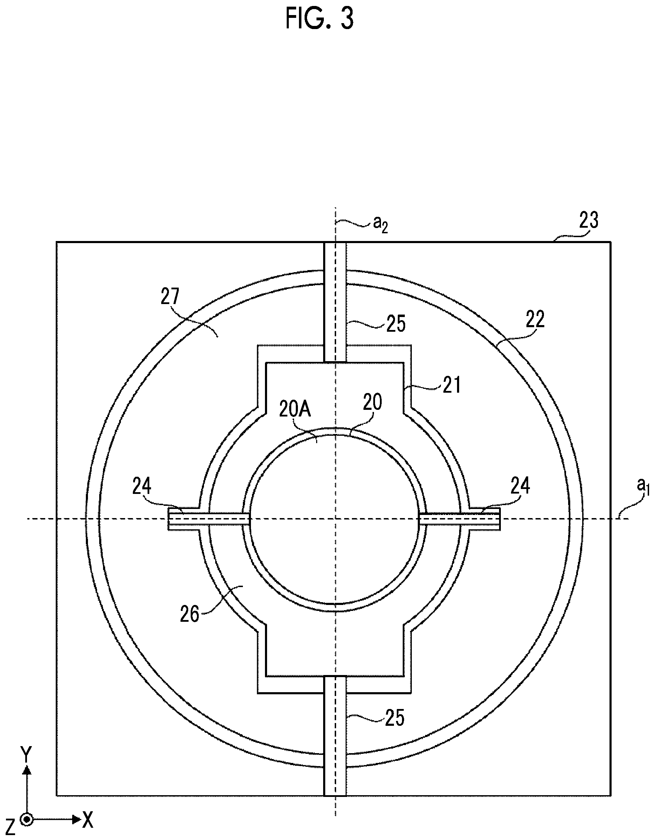

The MEMS mirror 2 is a piezoelectric two-axis driving type micromirror device that can swing a mirror portion 20 (refer to Fig. 3) around a first axis $a_1$ and a second axis $a_2$ orthogonal to the first axis $a_1$. Hereinafter, a direction parallel to the first axis $a_1$ is an X direction, a direction parallel to the second axis $a_2$ is a Y direction, and a direction orthogonal to the first axis $a_1$ and the second axis $a_2$ is a Z direction. Further, the swing of the mirror portion 20 is also referred to as a mirror tilt swing.

In the present embodiment, an example in which the first axis $a_1$ and the second axis $a_2$ are orthogonal (that is, intersect perpendicularly) is shown, but the first axis $a_1$ and the second axis $a_2$ may intersect at an angle other than 90°. In the present disclosure, orthogonal means intersecting within a certain angle range including a margin of error centered at 90°.

The light source 3 is, for example, a laser apparatus that emits a laser beam as the light beam L. The light source 3 preferably emits the light beam L perpendicularly to a reflecting surface 20A (refer to Fig. 3) provided in the mirror portion 20 in a state where the mirror portion 20 of the MEMS mirror 2 is stationary.

The driving controller 4 outputs driving signals to the light source 3 and the MEMS mirror 2 based on optical scanning information. The light source 3 generates the light beam L based on the input driving signal and emits the generated light beam to the MEMS mirror 2. The MEMS mirror 2 swings the mirror portion 20 around the first axis $a_1$ and the second axis $a_2$ based on the input driving signal.

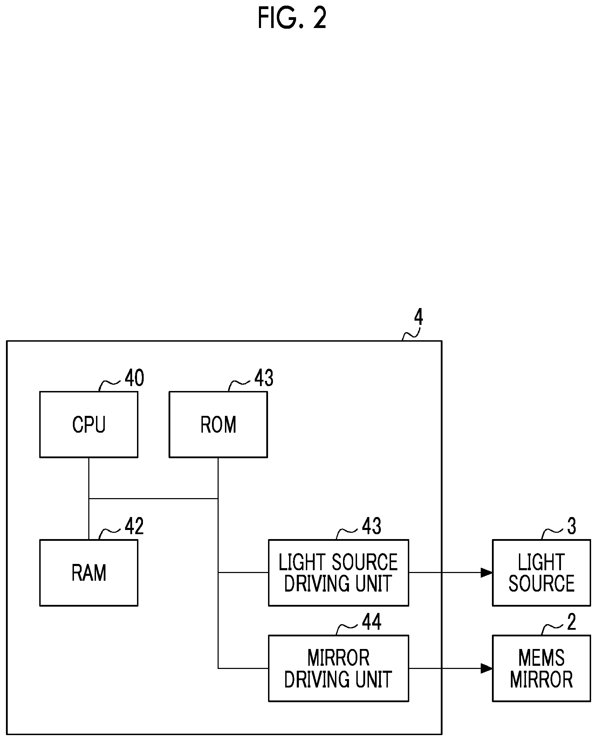

Fig. 2 shows an example of a hardware configuration of the driving controller 4. The driving controller 4 has a central processing unit (CPU) 40, a read only memory (ROM) 41, a random access memory (RAM) 42, a light source driving unit 43, and a mirror driving unit 44. The CPU 40 is a calculation unit that reads out a program and data from a storage device such as the ROM 41 into the RAM 42 and executes processing to realize the entire function of the driving controller 4. The CPU 40 is an example of a "processor" according to the technique of the present disclosure.

The ROM 41 is a non-volatile storage device and stores the program for the CPU 40 to execute the processing and the data such as the above-mentioned optical scanning information. The RAM 42 is a non-volatile storage device that temporarily holds the program and the data.

The light source driving unit 43 is an electric circuit that outputs the driving signal to the light source 3 under the control of the CPU 40. In the light source driving unit 43, the driving signal is a driving voltage for controlling an emission timing and emission intensity of the light source 3.

The mirror driving unit 44 is an electric circuit that outputs the driving signal to the MEMS mirror 2 under the control of the CPU 40. In the mirror driving unit 44, the driving signal is a driving voltage for controlling a timing, cycle, and deflection angle of swinging the mirror portion 20 of the mirror driving unit 44. As will be described in detail below, the driving signal includes a first driving signal and a second driving signal.

For example, in the mirror driving unit 44, the driving signal is created as a digital signal and output via a digital analog converter (DAC) and an amplification amplifier. The driving signal may be output as a stepped waveform based on the number of resolution bits of a digital signal source. Further, the driving signal can be created from a pulse signal, a bandpass filter, and the like.

The CPU 40 controls the light source driving unit 43 and the mirror driving unit 44 based on the optical scanning information. The optical scanning information represents how to scan the surface to be scanned 5 with the light beam L. In the present embodiment, the optical scanning information represents that the light beam L is scanned to draw a donut-shaped orbit on the surface to be scanned 5. For example, in a case where the optical scanning device 10 is applied to the LiDAR device, the optical scanning information includes a timing of emitting the light beam L for distance measurement, an emission range of the light beam, and the like.

Next, a configuration of the MEMS mirror 2 according to the present embodiment will be described with reference to Fig. 3. As shown in Fig. 3, the MEMS mirror 2 comprises a mirror portion 20, a first movable frame 21, a second movable frame 22, a fixed frame 23, a first support portion 24, a second support portion 25, a first actuator 26, and a second actuator 27. The MEMS mirror 2 is formed, for example, by etching a silicon-on-insulator (SOI) substrate.

The mirror portion 20 has the reflecting surface 20A reflecting incident light. The reflecting surface 20A is formed of, for example, a metal thin film such as gold (Au) or aluminum (Al) provided on one surface of the mirror portion 20. The reflecting surface 20A is, for example, circular.

The first movable frame 21 is disposed so as to surround the mirror portion 20. The first movable frame 21 is connected to the second movable frame 22 on the first axis $a_1$ via the first support portion 24. The first actuator 26 is configured by forming a piezoelectric element on the first movable frame 21 at each of positions facing each other with the first axis $a_1$ interposed therebetween. Further, the first movable frame 21 is connected to the fixed frame 23 on the second axis $a_2$ via the second support portion 25.

The second movable frame 22 is disposed so as to surround the first movable frame 21. The second movable frame 22 is connected to the fixed frame 23 on the second axis $a_2$ via the second support portion 25. The second actuator 27 is configured by forming a piezoelectric element on the second movable frame 22 at each of positions facing each other with the second axis $a_2$ interposed therebetween.

The fixed frame 23 has a rectangular outer shape and is disposed so as to surround the second movable frame 22.

The first support portion 24 connects the mirror portion 20 and the second movable frame 22 on the first axis $a_1$ and supports the mirror portion 20 swingably around the first axis $a_1$. Further, the first support portion 24 connects the first movable frame 21 and the second movable frame 22 on the first axis $a_1$ and supports the first movable frame 21 swingably around the first axis $a_1$. The first axis $a_1$ is in a plane including the reflecting surface 20A in a case where the mirror portion 20 is stationary. For example, the first support portion 24 is a torsion bar extending along the first axis $a_1$.

The second support portion 25 connects the first movable frame 21 and the fixed frame 23 on the second axis $a_2$ and supports the first movable frame 21 swingably around the second axis $a_2$. Further, the second support portion 25 connects the second movable frame 22 and the fixed frame 23 on the second axis $a_2$ and supports the second movable frame 22 swingably around the second axis $a_2$. The second axis $a_2$ is orthogonal to the first axis $a_1$ in the plane including the reflecting surface 20A in a case where the mirror portion 20 is stationary. For example, the second support portion 25 is a torsion bar extending along the second axis $a_2$.

The first actuator 26 and the second actuator 27 are piezoelectric actuators each provided with the piezoelectric element. The first actuator 26 applies a rotational torque around the first axis $a_1$ to the mirror portion 20. The first actuator 26 applies the rotational torque around the first axis $a_1$ to the first movable frame 21. Accordingly, the mirror portion 20 swings around the first axis $a_1$. The second actuator 27 applies the rotational torque around the second axis $a_2$ to the first movable frame 21. The second actuator 27 applies the rotational torque around the second axis $a_2$ to the second movable frame 22. Accordingly, the mirror portion 20 swings around the second axis $a_2$. In Fig. 3, wiring and electrode pads for providing the driving signals to the first actuator 26 and the second actuator 27 are not illustrated.

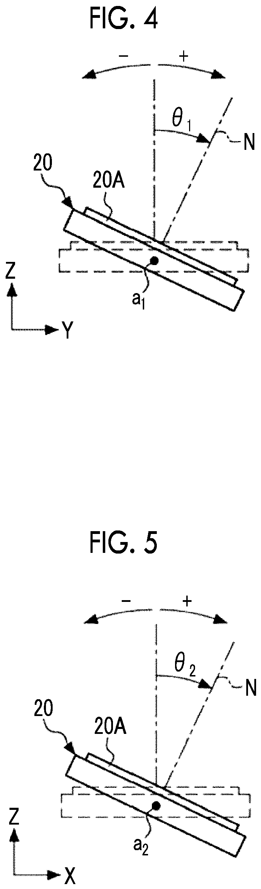

The deflection angle in a case where the mirror portion 20 swings will be described with reference to Figs. 4 and 5. Fig. 4 shows a deflection angle (hereinafter, referred to as "first deflection angle") $\theta_1$ around the first axis $a_1$ of the mirror portion 20. Fig. 5 shows a deflection angle (hereinafter, referred to as "second deflection angle") $\theta_2$ around

the second axis $a_2$ of the mirror portion 20.

As shown in Fig. 4, the first deflection angle $\theta_1$ is an angle at which a normal line N of the reflecting surface 20A of the mirror portion 20 is inclined in a YZ plane. The first deflection angle $\theta_1$ takes a positive value in a case where the normal line N of the reflecting surface 20A is inclined in a +Y direction, and the first deflection angle $\theta_1$ takes a negative value in a case where the normal line N thereof is inclined in a -Y direction.

The first deflection angle $\theta_1$ is controlled by a driving signal (hereinafter, referred to as "first driving signal") provided to the first actuator 26 by the driving controller 4. The first driving signal is, for example, a sinusoidal alternating voltage. Details of the first driving signal will be described below.

As shown in Fig. 5, the second deflection angle $\theta_2$ is an angle at which the normal line N of the reflecting surface 20A of the mirror portion 20 is inclined in an XZ plane. The second deflection angle $\theta_2$ takes a positive value in a case where the normal line N of the reflecting surface 20A is inclined in a +X direction, and the second deflection angle $\theta_2$ takes a negative value in a case where the normal line N thereof is inclined in a -X direction.

The second deflection angle $\theta_2$ is controlled by a driving signal (hereinafter, referred to as "second driving signal") provided to the second actuator 27 by the driving controller 4. The second driving signal is, for example, a sinusoidal alternating voltage. Details of the second driving signal will be described below.

A first driving signal $V_x(t)$ is a signal on which driving voltage waveforms $V_{x1}(t)$ and $V_{x2}(t)$ are superimposed, as shown by the following equation (1). The driving voltage waveforms $V_{x1}(t)$ and $V_{x2}(t)$ are indicated by the following equations (2) and (3). That is, the first driving signal $V_x(t)$ is a signal including two components of different frequencies $f_1$ and $f_2$.

$$V_x(t) = V_{x1}(t) + V_{x2}(t)...(1)$$

$$V_{x1}(t) = A_{x1}\sin(2\pi f_1 t)...(2)$$

$$V_{x2}(t) = A_{x2}\sin(2\pi f_2 t + \gamma_3)...(3)$$

Here, t is a time. $A_{x1}$ and $A_{x2}$ are amplitudes, $f_1$ and $f_2$ are driving frequencies. $\gamma_3$ is a phase difference between the driving voltage waveforms $V_{x1}(t)$ and $V_{x2}(t)$.

A second driving signal $V_y(t)$ is a signal on which driving voltage waveforms $V_{y1}(t)$ and $V_{y2}(t)$ are superimposed, as shown by the following equation (4). The driving voltage waveforms $V_{y1}(t)$ and $V_{y2}(t)$ are indicated by the following equations (5) and (6). That is, the second driving signal $V_y(t)$ is a signal including two components of different frequencies $f_1$ and $f_2$.

$$V_y(t) = V_{y1}(t) + V_{y2}(t)...(4)$$

$$V_{y1}(t) = A_{y1}\sin(2\pi f_1 t + \gamma_1)...(5)$$

$$V_{y2}(t) = A_{y2}\sin(2\pi f_2 t + \gamma_3 + \gamma_2)...(6)$$

Here, t is a time. $A_{y1}$ and $A_{y2}$ are amplitudes, $f_1$ and $f_2$ are driving frequencies. $\gamma_1$ is a phase difference between the driving voltage waveforms $V_{x1}(t)$ and $V_{y1}(t)$. $\gamma_2$ is a phase difference between the driving voltage waveforms $V_{x2}(t)$ and $V_{y2}(t)$. $\gamma_3$ is a phase difference between the driving voltage waveforms $V_{y1}(t)$ and $V_{y2}(t)$. $\gamma_1$, $\gamma_2$, and $\gamma_3$ satisfy a relationship of $-\pi \leq \gamma_1$, $\gamma_2$, and $\gamma_3 \leq \pi$. $\gamma_3$ correlates with a position of a start point of the optical scanning on the surface to be scanned 5. In the present embodiment, $\gamma_3$ is 0°. A generation circuit of the sinusoidal driving voltage waveforms represented by equations (1) to (6) can be formed in various forms. For example, there is a method of performing a voltage output based on a result of calculation of equations (1) to (6) by a CPU from a DAC capable of outputting a random waveform. Further, a method may be employed in which a pulse group output by pulse width modulation (PWM) control is passed through $f_1$ and $f_2$ and passed through a frequency filter that cuts off a harmonic component to create a waveform close to a sinusoidal wave.

In the present embodiment, a relationship of $f_1 > f_2$ is satisfied. Further, in the present embodiment, the unit of $f_1$ and $f_2$ is Hz, a maximum commitment number of $f_1$ and $f_2$ is an integer F, and F ≥ 10 or more. The maximum commitment number of $f_1$ and $f_2$ corresponds to a frame rate of the optical scanning. That is, in the present embodiment, the frame rate is 10 fps or more.

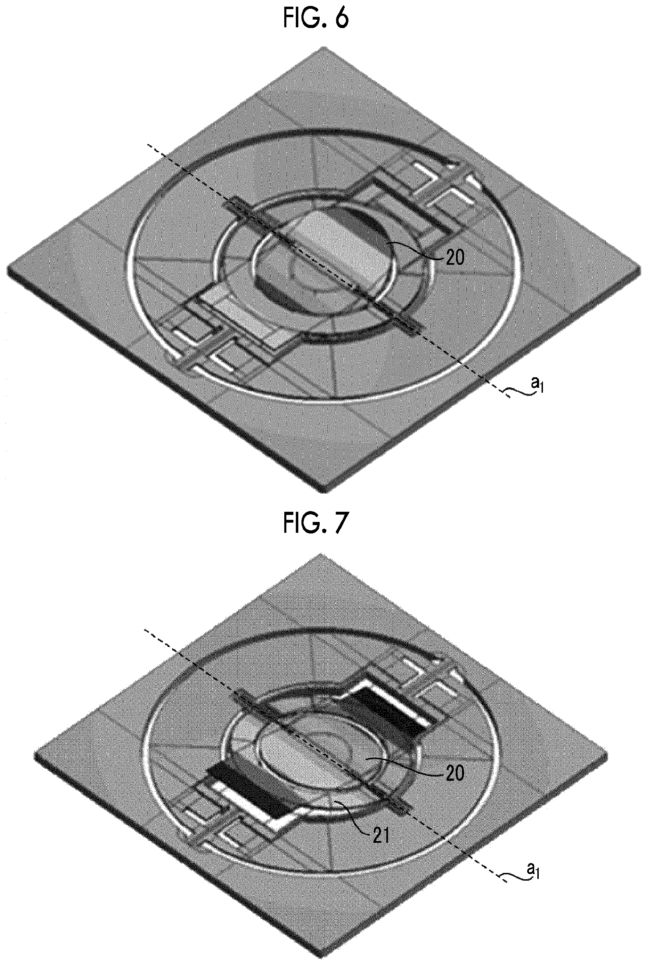

As shown in Fig. 6, in a case where the first driving signal $V_x(t)$ including only $V_{x1}(t)$ of the driving voltage waveforms $V_{x1}(t)$ and $V_{x2}(t)$ is applied to the first actuator 26, the mirror portion 20 swings around the first axis $a_1$.

As shown in Fig. 7, in a case where the first driving signal $V_x(t)$ including only $V_{x2}(t)$ of the driving voltage waveforms $V_{x1}(t)$ and $V_{x2}(t)$ is applied to the first actuator 26, the mirror portion 20 and the first movable frame 21 swing around the first axis $a_1$.

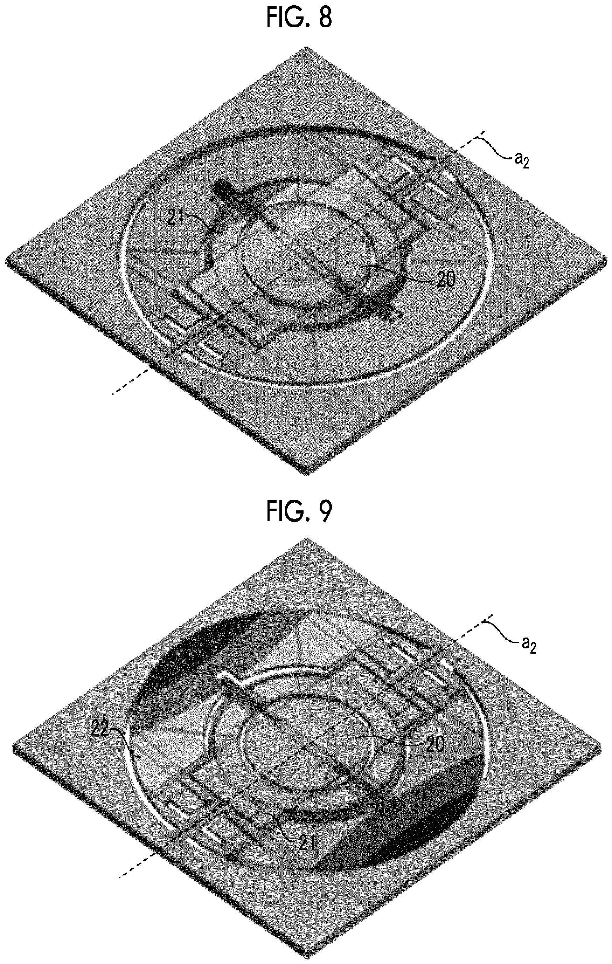

As shown in Fig. 8, in a case where the second driving signal $V_y(t)$ including only $V_{y1}(t)$ of the driving voltage waveforms $V_{y1}(t)$ and $V_{y2}(t)$ is applied to the second actuator 27, the mirror portion 20 and the first movable frame 21 swing around the second axis $a_2$.

As shown in Fig. 9, in a case where the second driving signal $V_y(t)$ including only $V_{y2}(t)$ of the driving voltage waveforms $V_{y1}(t)$ and $V_{y2}(t)$ is applied to the second actuator 27, the mirror portion 20, the first movable frame 21, and the second movable frame 22 swing around the second axis $a_2$.

The MEMS mirror 2 has two resonance frequencies $f_{x1}$ and $f_{x2}$ ($f_{x1} > f_{x2}$) in a resonance mode accompanied by the swing of the mirror portion 20 around the first axis $a_1$ and two resonance frequencies, $f_{y1}$ and $f_{y2}$ ($f_{y1} > f_{y2}$) in a resonance mode accompanied by the swing of the mirror portion 20 around the second axis $a_2$. In the present embodiment, the following relationships of equations (7) to (10) are satisfied.

$$|f_{x1} - f_1| < f_1/100...(7)$$

$$|f_{y1} - f_1| < f_1/100...(8)$$

$$|f_{x2} - f_2| < f_2/100...(9)$$

$$|f_{y2} - f_2| < f_2/100...(10)$$

Hereinafter, the optical scanning by the mirror portion 20 based on the frequency $f_1$ is referred to as main scanning, and the optical scanning by the mirror portion 20 based on the frequency $f_2$ is referred to as sub scanning.

A time change $\theta_x(t)$ of the first deflection angle $\theta_1$ in a case where the first driving signal $V_x(t)$ is applied to the first actuator 26 is represented by the following equation (11). A time change $\theta_y(t)$ of the second deflection angle $\theta_2$ in a case where the second driving signal $V_y(t)$ is applied to the second actuator 27 is represented by the following equation (12).

$$\theta_x(t) = \theta_{x1}\sin(2\pi f_1 t) + \theta_x 2\sin(2\pi f_2 t + \gamma_6)...(11)$$

$$\theta_y(t) = \theta_{y1}\sin(2\pi f_1 t + \gamma_4) + \theta_{y2}\sin(2\pi f_2 t + \gamma_6 + \gamma_5)...(12)$$

Here, t is a time. $\theta_{y1}$ and $\theta_{y2}$ are amplitudes. $f_1$ and $f_2$ are frequencies. $\gamma_4$ is a phase difference between the swing around the first axis $a_1$ and the swing around the second axis $a_2$ of the main scanning of the mirror portion 20. $\gamma_5$ is a phase difference between the swing around the first axis $a_1$ and the swing around the second axis $a_2$ of the sub scanning of the mirror portion 20. $\gamma_6$ is a phase difference between the swing of the main scan and the swing of the sub scanning of the mirror portion 20.

The $\gamma_1$ and $\gamma_2$ described above are adjusted in advance such that $\gamma_4$ and $\gamma_5$ satisfy a relationship of $\gamma_4 = \gamma_5$. This

adjustment is performed, for example, by driving the optical scanning device 10 while changing $\gamma_1$ and $\gamma_2$ in a calibration mode and searching for $\gamma_1$ and $\gamma_2$ such that $\gamma_4$ and $\gamma_5$ satisfy the relationship of $\gamma_4 = \gamma_5$.

In the present embodiment, $\gamma_1$ and $\gamma_2$ are adjusted such that $\gamma_4 = \gamma_5 = 90°$ or $\gamma_4 = \gamma_5 = -90°$. Accordingly, the optical scanning is performed in a donut-shaped range centered on a perfect circle. The adjustment of $\gamma_1$ and $\gamma_2$ may be performed such that $\gamma_4 = \gamma_5 \neq 90°$. In this case, the optical scanning is performed in a donut-shaped range centered on an ellipse. Further, the adjustment may be performed such that $\gamma_4$ and $\gamma_5$ satisfy a relationship of $\gamma_5 = \gamma_4 + \pi$ or $\gamma_5 = \gamma_4 - \pi$.

The driving controller 4 applies the first driving signal $V_x(t)$ to the first actuator 26 and the second driving signal $V_y(t)$ to the second actuator 27. Accordingly, the driving controller 4 causes the mirror portion 20 to simultaneously excite the main scanning, which is a sinusoidal swing vibration of the frequency $f_1$ around the first axis $a_1$ and around the second axis $a_2$, and the sub scanning, which is a sinusoidal swing vibration of the frequency $f_2$ around the first axis $a_1$ and around the second axis $a_2$. As a result, the optical scanning can be performed in a donut-shaped range.

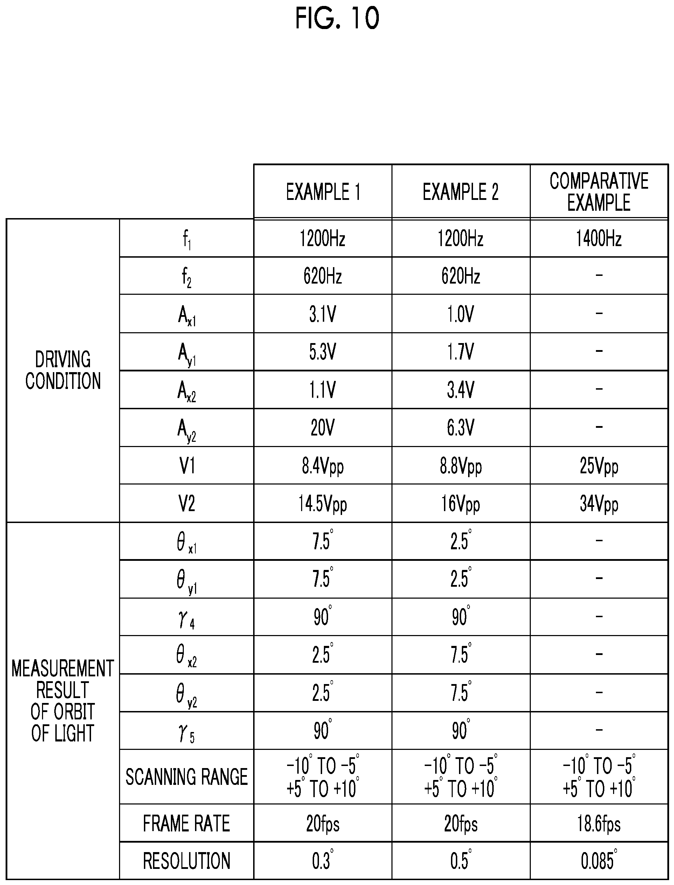

Hereinafter, two Examples and one Comparative Example will be described. Fig. 10 shows driving conditions used in Examples 1, 2, and Comparative Example, and measurement results of the orbit of light on the surface to be scanned 5 due to the swing of the mirror portion 20.

Example 1

As shown in Fig. 10, in Example 1, $f_1$ is 1200 Hz, $f_2$ is 620 Hz, $A_{x1}$ is 3.1 V, $A_{x2}$ is 1.1 V, $A_{y1}$ is 5.3 V, and $A_{y2}$ is 2.0 V in equations (1) to (6). That is, in Example 1, a relationship of $A_{x1} > A_{x2}$ is satisfied, and a relationship of $A_{y1} > A_{y2}$ is satisfied.

In Example 1, the measurement result is obtained in which $\theta_{x1}$ is 7.5°, $\theta_{x2}$ is 2.5°, $\theta_{y1}$ is 7.5°, $\theta_{y2}$ is 2.5°, $\gamma_4$ is 90°, and $\gamma_5$ is 90° in equations (11) and (12). Further, in Example 1, the frame rate is 20 fps and the resolution is 0.3°. The resolution represents an interval between adjacent lines of light on the surface to be scanned 5 by the deflection angle of the mirror portion 20, and the resolution is represented to be higher as a value of the resolution is smaller.

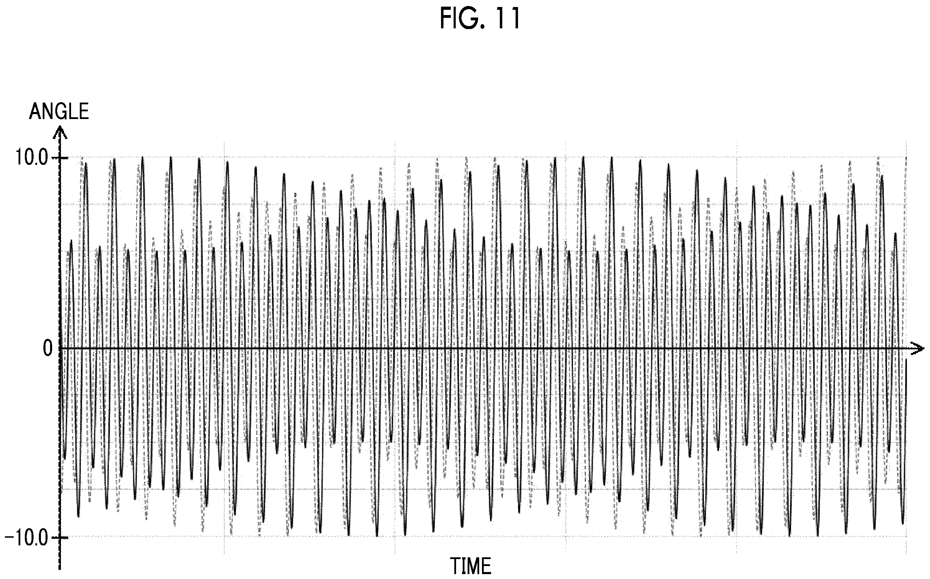

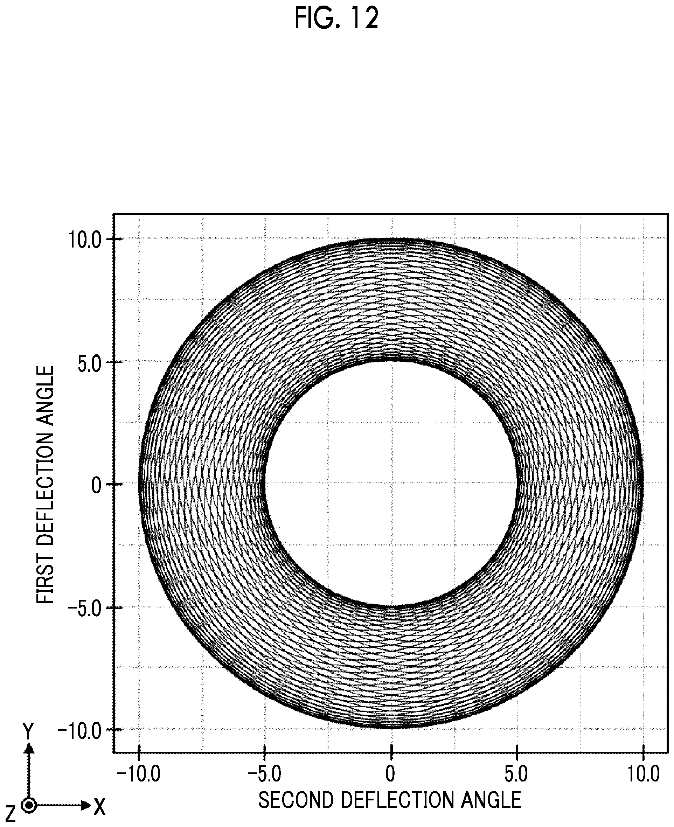

Fig. 11 shows transitions of the first deflection angle $\theta_1$ and the second deflection angle $\theta_2$ in a time series in Example 1. A solid line in Fig. 11 indicates the transition of the first deflection angle $\theta_1$ in a time series, and a broken line indicates the transition of the second deflection angle $\theta_2$ in a time series. Fig. 12 shows the orbit of light on the surface to be scanned 5 in Example 1.

As shown in Figs. 11 and 12, in Example 1, the optical scanning is realized to a donut-shaped region where each of the first deflection angle $\theta_1$ and the second deflection angle $\theta_2$ has a range of -5° to -10° and +5° to +10°.

In Example 1, an applied voltage V1 to the first actuator 26 is 8.4 Vpp, and an applied voltage V2 to the second actuator 27 is 14.5 Vpp.

Example 2

As shown in Fig. 10, in Example 2, $f_1$ is 1200 Hz, $f_2$ is 620 Hz, $A_{x1}$ is 1.0 V, $A_{x2}$ is 3.4 V, $A_{y1}$ is 1.7 V, and $A_{y2}$ is 6.3 V in equations (1) to (6).

In Example 2, the measurement result is obtained in which $\theta_{x1}$ is 2.5°, $\theta_{x2}$ is 7.5°, $\theta_{y1}$ is 2.5°, $\theta_{y2}$ is 7.5°, $\gamma_4$ is 90°, and $\gamma_5$ is 90° in equations (11) and (12). Further, in Example 2, the frame rate is 20 fps and the resolution is 0.5°. That is, in Example 1 satisfying the relationship of $A_{x1} > A_{x2}$ and the relationship of $A_{y1} > A_{y2}$, the resolution is higher than that of Example 2.

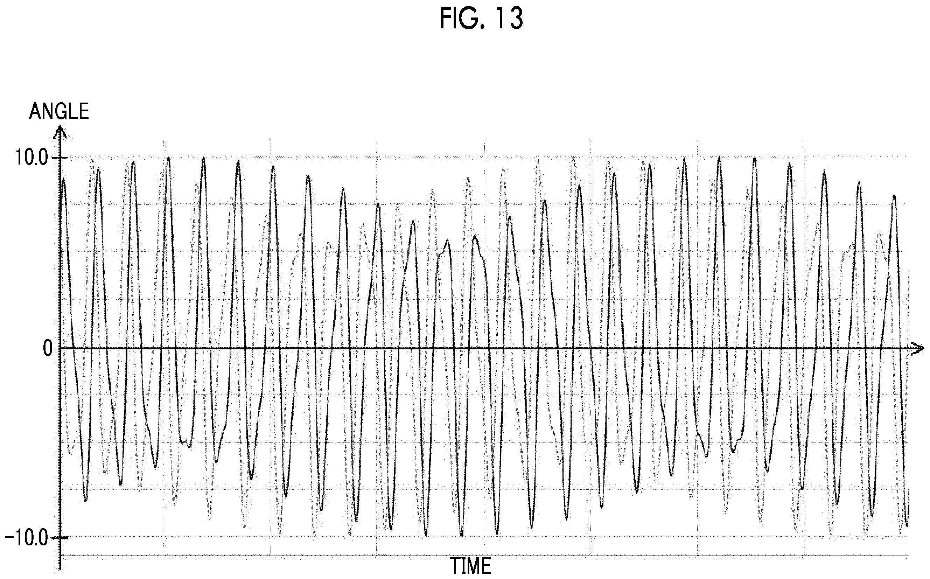

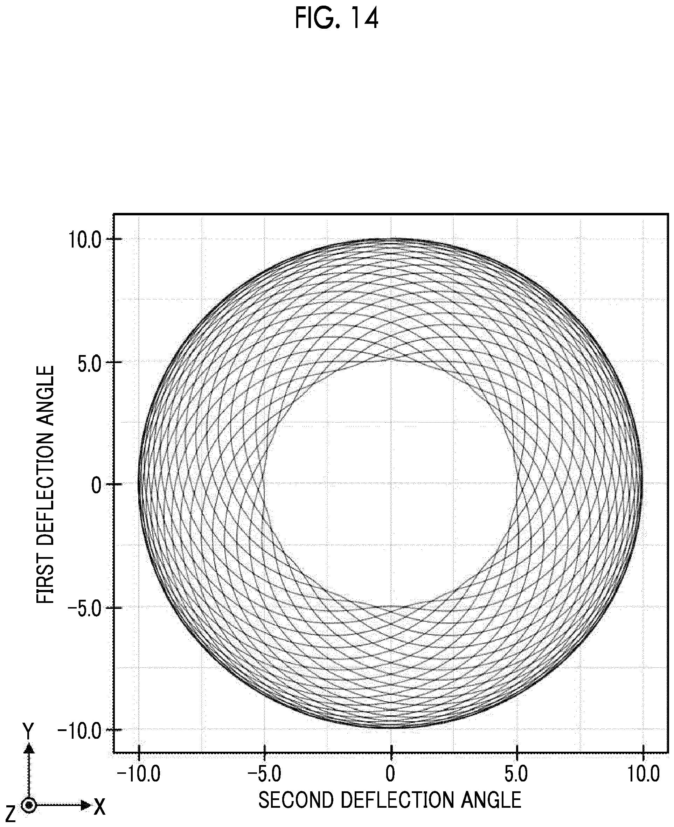

Fig. 13 shows transitions of the first deflection angle $\theta_1$ and the second deflection angle $\theta_2$ in a time series in Example 2. A solid line in Fig. 13 indicates the transition of the first deflection angle $\theta_1$ in a time series, and a broken line indicates the transition of the second deflection angle $\theta_2$ in a time series. Fig. 14 shows the orbit of light on the surface to be scanned 5 in Example 2.

As shown in Figs. 13 and 14, in Example 2, the optical scanning is realized to a donut-shaped region where each of the first deflection angle $\theta_1$ and the second deflection angle $\theta_2$ has a range of -5° to -10° and +5° to +10°.

In Example 2, the applied voltage V1 to the first actuator 26 is 8.8 Vpp, and the applied voltage V2 to the second actuator 27 is 16 Vpp.

Comparative Example

In Comparative Example, the driving voltage waveforms $V_{x1}(t)$ and $V_{x2}(t)$ indicated by the following equations (13) and (14) are used as the driving voltage waveforms $V_{x1}(t)$ and $V_{x2}(t)$ included in the first driving signal $V_x(t)$.

$$V_{x1}(t) = A_1(t)\sin(2\pi f_d t + \gamma_1(t))...(13)$$

$$V_{x2}(t) = A_1(t)\sin(2\pi f_d t + \gamma_1(t) + \pi)...(14)$$

Here, t is a time. $f_d$ is a driving frequency. $A_1(t)$ is amplitude and changes over time t. $\gamma_1(t)$ is phase and changes over time t.

In Comparative Example, the driving voltage waveforms $V_{y1}(t)$ and $V_{y2}(t)$ indicated by the following equations (15) and (16) are used as the driving voltage waveforms $V_{y1}(t)$ and $V_{y2}(t)$ included in the second driving signal $V_y(t)$.

$$V_{y1}(t) = A_2(t)\sin(2\pi f_d t + \gamma_2(t) + \varphi)...(15)$$

$$V_{y2}(t) = A_2(t)\sin(2\pi f_d t + \gamma_2(t) + \varphi + \pi)...(16)$$

Here, t is a time. $f_d$ is a driving frequency. $A_2(t)$ is amplitude and changes over time t. $\gamma_2(t)$ is phase and changes over time t. In Comparative Example, $\varphi = \pi/2$ (that is, 90°) in order to cause the mirror portion 20 to perform a circular spiral scan operation. Further, in Comparative Example, $f_d$ is 1400 Hz.

As shown in Fig. 10, in Comparative Example as well, as in Examples 1 and 2, the optical scanning is realized to a donut-shaped region where each of the first deflection angle $\theta_1$ and the second deflection angle $\theta_2$ has a range of -5° to -10° and +5° to +10°, by the spiral scanning operation. Further, in Comparative Example, the frame rate is 18.6 fps and the resolution is 0.085°.

In Comparative Example, the applied voltage V1 to the first actuator 26 is 25 Vpp, and the applied voltage V2 to the second actuator 27 is 34 Vpp.

As described above, according to the present embodiment, the first driving signal $V_x(t)$ including two components of different frequencies $f_1$ and $f_2$ is applied to the first actuator 26 and the second driving signal $V_y(t)$ including the components of the frequencies $f_1$ and $f_2$ is applied to the second actuator 27 to scan the donut-shaped incident surface. Therefore, as a result of eliminating the need for amplitude modulation, the driving voltage for scanning the donut-shaped incident surface can be reduced.

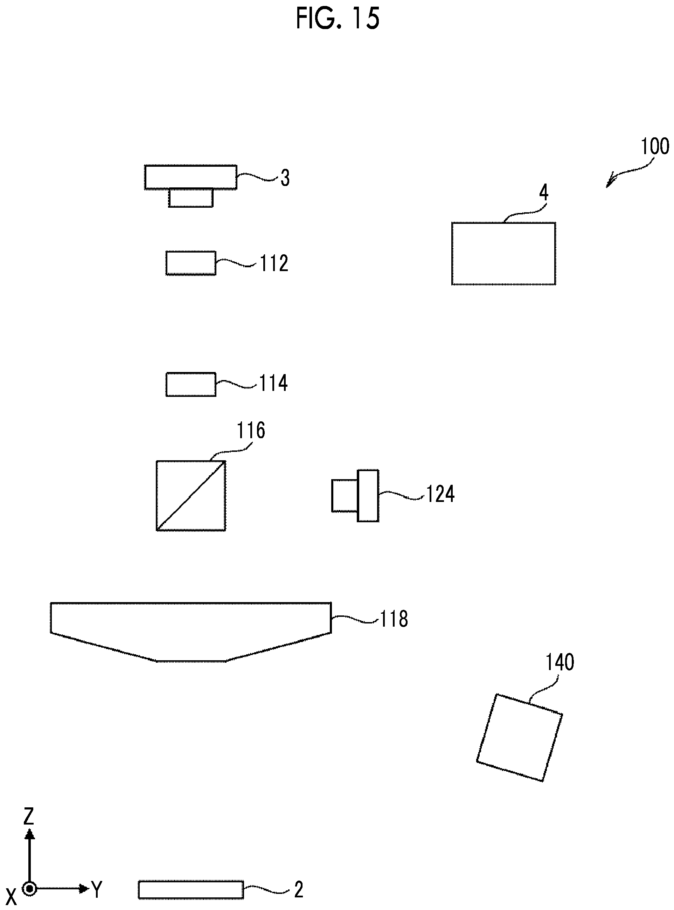

Next, a distance measurement device 100 using the optical scanning device 10 according to the embodiment will be described. As shown in Fig. 15, the distance measurement device 100 comprises the MEMS mirror 2, the light source 3, and the driving controller 4, which are included in the optical scanning device 10. Further, the distance measurement device 100 comprises collimator lenses 112 and 114, a beam splitter 116, a deflecting optical member 118, and a light receiving element 124.

The distance measurement device 100 is a so-called LiDAR device that scans the light from the light source 3 to scan an object to be measured 140 and measures a time until the light reflected by the object to be measured 140 returns to measure a distance to the object to be measured 140.

The collimator lens 112 and the collimator lens 114 are positioned between the light source 3 and the beam splitter 116 on an optical path between the light source 3 and the MEMS mirror 2, in the order of the collimator lens 112 and the collimator lens 114 from a light source 3 side.

The beam splitter 116 is positioned between the collimator lens 114 and the deflecting optical member 118 on the optical path between the light source 3 and the MEMS mirror 2. The beam splitter 116 passes the light emitted from the light source 3 in a direction of the MEMS mirror 2 and guides the light reflected in a direction of the light source 3 by the MEMS mirror 2 to the light receiving element 124.

The deflecting optical member 118 is positioned between the beam splitter 116 and the MEMS mirror 2 on the optical path between the light source 3 and the MEMS mirror 2. The deflecting optical member 118 deflects the light reflected by the mirror portion 20 of the MEMS mirror 2 in all directions. In the present embodiment, an example will be described in which an omnidirectional lens having a donut-shaped incident surface is used as the deflecting optical member 118. The donut-shaped incident surface of the deflecting optical member 118 is provided on a MEMS mirror 2 side. As described above, the mirror portion 20 of the MEMS mirror 2 performs the optical scanning on the donut-shaped incident surface of the deflecting optical member 118, and thus the light is deflected in all directions by the deflecting optical member 118.

The light receiving element 124 outputs a signal corresponding to the received light to the driving controller 4.

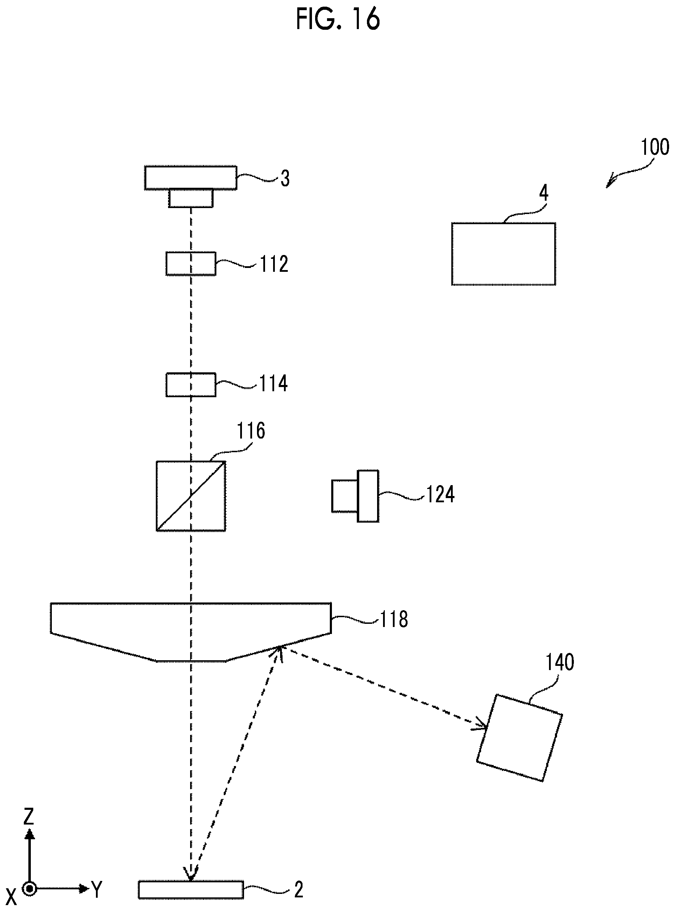

As shown in Fig. 16, the light emitted from the light source 3 is collimated by the collimator lens 112 and the collimator lens 114, passes through the beam splitter 116 and the deflecting optical member 118, and is reflected by the mirror portion 20 of the MEMS mirror 2. In the MEMS mirror 2, the mirror portion 20 swings around the first axis $a_1$

and the second axis $a_2$ to reflect the light on the donut-shaped incident surface of the deflecting optical member 118. The deflecting optical member 118 deflects the light incident on the donut-shaped incident surface in all directions. In the example of Fig. 16, a broken line arrow indicates a path of light that reaches the object to be measured 140 is indicated by a broken line arrow, among the light deflected in all directions by the deflecting optical member 118.

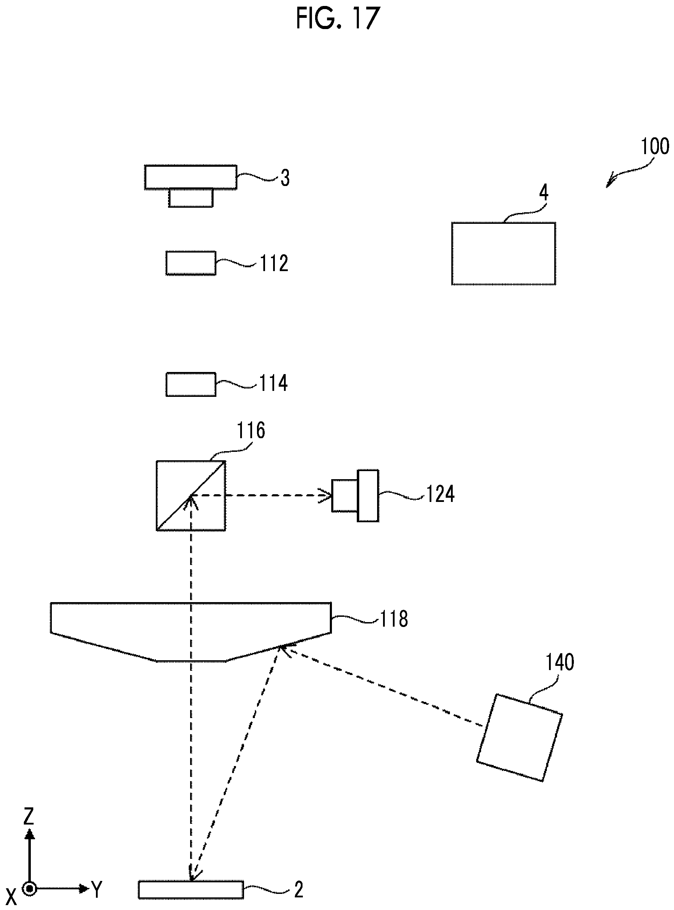

As shown in Fig. 17, the light that reaches the object to be measured 140 is reflected by the object to be measured 140. The light reflected by the object to be measured 140 is reflected by the deflecting optical member 118 and the mirror portion 20 of the MEMS mirror 2, passes through the deflecting optical member 118, and is guided to the light receiving element 124 by the beam splitter 116. The light receiving element 124 outputs a signal corresponding to the light guided by the beam splitter 116 to the driving controller 4. In the example of Fig. 17, a broken line arrow indicates a path of light that is reflected by the object to be measured 140 and reaches the light receiving element 124.

The CPU 40 of the driving controller 4 derives the distance to the object to be measured 140 based on a time difference between an emission timing of the light from the light source 3 and an output timing of the signal from the light receiving element 124. For example, the CPU 40 uses a lookup table or the like in which the time difference and the distance to the object to be measured 140 are associated with each other to derive the distance to the object to be measured 140.

The first axis $a_1$ and the second axis $a_2$ in the above embodiment are interchangeable. That is, in the above embodiment, the axis along the first support portion 24 is the first axis $a_1$, and the axis along the second support portion 25 is the second axis $a_2$. However, the axis along the first support portion 24 may be the second axis $a_2$, and the axis along the second support portion 25 may be the first axis $a_1$.

The configuration of the MEMS mirror 2 shown in the above embodiment can be changed as appropriate. For example, one or both of the first actuator 26 and the second actuator 27 may have a meander structure.

The hardware configuration of the driving controller 4 can be modified in various ways. The driving controller 4 can be configured by using at least one of an analog calculation circuit and a digital calculation circuit. The driving controller 4 may be configured by one processor or a combination of two or more processors of the same type or different types. The processor includes a central processing unit (CPU), a programmable logic device (PLD), a dedicated electric circuit, and the like. The CPU is a general-purpose processor that executes software (program) and functions as various processing units as is well known. The PLD is a processor whose circuit configuration can be changed after manufacturing, such as a field programmable gate array (FPGA). The dedicated electric circuit is a processor having a circuit configuration designed specially for executing specific processing, such as an application specific integrated circuit (ASIC).

Explanation of References

2: MEMS mirror
3: light source
4: driving controller
5: surface to be scanned
10: optical scanning device
20: mirror portion
20A: reflecting surface
21: first movable frame
22: second movable frame
23: fixed frame
24: first support portion
25: second support portion
26: first actuator
27: second actuator
40: CPU
41: ROM
42: RAM
43: light source driving unit
44: mirror driving unit
100: distance measurement device
112, 114: collimator lens
116: beam splitter
118: deflecting optical member
124: light receiving element

140: object to be measured
L: light beam
N: normal line
$a_1$: first axis
$a_2$: second axis

**Claims**

1. An optical scanning device comprising:

   a mirror device that has a mirror portion, which is swingable around a first axis and a second axis intersecting each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion; and
   at least one processor,
   wherein the processor
   applies a first driving signal $V_x(t)$ including two components of different frequencies $f_1$ and $f_2$ represented by the following equation (A) to the first actuator and a second driving signal $V_y(t)$ including components of the frequencies $f_1$ and $f_2$ represented by the following equation (B) to the second actuator to cause the mirror portion to excite main scanning, which is a sinusoidal swing vibration of the frequency $f_1$ around the first axis and the second axis and sub scanning, which is a sinusoidal swing vibration of the frequency $f_2$ around the first axis and the second axis,

   $$V_x(t) = A_{x1}\sin(2\pi f_1 t) + A_{x2}\sin(2\pi f_2 t + \gamma_3)...(A)$$

   $$V_y(t) = A_{y1}\sin(2\pi f_1 t + \gamma_1) + A_{y2}\sin(2\pi f_2 t + \gamma_3 + \gamma_2)...(B)$$

   in the equations (A) and (B), a relationship of $f_1 > f_2$, $-\pi \le \gamma_1$, $\gamma_2$, and $\gamma_3 \le \pi$ is satisfied, and $\gamma_1$ and $\gamma_2$ are phase differences adjusted such that a phase difference $\gamma_4$ between the swing around the first axis and the swing around the second axis in the main scanning of the mirror portion and a phase difference $\gamma_5$ between the swing around the first axis and the swing around the second axis in the sub scanning of the mirror portion satisfy a relationship of $\gamma_4 = \gamma_5$, $\gamma_5 = \gamma_4 + \pi$, or $\gamma_5 = \gamma_4 - \pi$.

2. The optical scanning device according to claim 1,
   wherein a maximum commitment number of the frequencies $f_1$ and $f_2$ is an integer F, and $F \ge 10$.

3. The optical scanning device according to claim 1 or 2,
   wherein a relationship of $A_{x1} > A_{x2}$ is satisfied in the equation (A), and a relationship of $A_{y1} > A_{y2}$ is satisfied in the equation (B).

4. The optical scanning device according to any one of claims 1 to 3,
   wherein in a case where two resonance frequencies in a resonance mode with a mirror tilt swing around the first axis are $f_{x1}$ and $f_{x2}$ ($f_{x1} > f_{x2}$) and two resonance frequencies in a resonance mode with a mirror tilt swing around the second axis are $f_{y1}$ and $f_{y2}$ ($f_{y1} > f_{y2}$), the following relationships of equations (C) to (F) are satisfied.

   $$|f_{x1} - f_1| < f_1/100...(C)$$

   $$|f_{y1} - f_1| < f_1/100...(D)$$

$$|f_{x2} - f_2| < f_2/100...(E)$$

$$|f_{y2} - f_2| < f_2/100...(F)$$

5. A driving method of an optical scanning device including a mirror device that has a mirror portion, which is swingable around a first axis and a second axis intersecting each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion, the driving method comprising:

applies a first driving signal $V_x(t)$ including two components of different frequencies $f_1$ and $f_2$ represented by the following equation (A) to the first actuator and a second driving signal $V_y(t)$ including components of the frequencies $f_1$ and $f_2$ represented by the following equation (B) to the second actuator to cause the mirror portion to excite main scanning, which is a sinusoidal swing vibration of the frequency $f_1$ around the first axis and the second axis and sub scanning, which is a sinusoidal swing vibration of the frequency $f_2$ around the first axis and the second axis,

$$V_x(t) = A_{x1}\sin(2\pi f_1 t) + A_{x2}\sin(2\pi f_2 t + \gamma_3)...(A)$$

$$V_y(t) = A_{y1}\sin(2\pi f_1 t + \gamma_1) + A_{y2}\sin(2\pi f_2 t + \gamma_3 + \gamma_2)...(B)$$

in the equations (A) and (B), a relationship of $f_1 > f_2$, $-\pi \le \gamma_1$, $\gamma_2$, and $\gamma_3 \le \pi$ is satisfied, and $\gamma_1$ and $\gamma_2$ are phase differences adjusted such that a phase difference $\gamma_4$ between the swing around the first axis and the swing around the second axis in the main scanning of the mirror portion and a phase difference $\gamma_5$ between the swing around the first axis and the swing around the second axis in the sub scanning of the mirror portion satisfy a relationship of $\gamma_4 = \gamma_5$, $\gamma_5 = \gamma_4 + \pi$, or $\gamma_5 = \gamma_4 - \pi$.

6. A distance measurement device comprising:

the optical scanning device according to any one of claims 1 to 4;
a light source that emits light to the mirror portion of the optical scanning device;
a light receiving element that outputs a signal corresponding to received light;
a deflecting optical member that deflects light reflected by the mirror portion of the optical scanning device in all directions;
a beam splitter that guides light deflected by the deflecting optical member, reflected by an object to be measured, and reflected by the mirror portion to the light receiving element; and
at least one processor,
wherein the processor
derives a distance to the object to be measured based on a time difference between an emission timing of the light from the light source and an output timing of the signal from the light receiving element.

# FIG. 1

FIG. 2

# FIG. 3

# FIG. 4

# FIG. 5

# FIG. 6

# FIG. 7

FIG. 8

FIG. 9

# FIG. 10

|  |  | EXAMPLE 1 | EXAMPLE 2 | COMPARATIVE EXAMPLE |
|---|---|---|---|---|
| DRIVING CONDITION | $f_1$ | 1200Hz | 1200Hz | 1400Hz |
|  | $f_2$ | 620Hz | 620Hz | – |
|  | $A_{x1}$ | 3.1V | 1.0V | – |
|  | $A_{y1}$ | 5.3V | 1.7V | – |
|  | $A_{x2}$ | 1.1V | 3.4V | – |
|  | $A_{y2}$ | 20V | 6.3V | – |
|  | V1 | 8.4Vpp | 8.8Vpp | 25Vpp |
|  | V2 | 14.5Vpp | 16Vpp | 34Vpp |
| MEASUREMENT RESULT OF ORBIT OF LIGHT | $\theta_{x1}$ | 7.5° | 2.5° | – |
|  | $\theta_{y1}$ | 7.5° | 2.5° | – |
|  | $\gamma_4$ | 90° | 90° | – |
|  | $\theta_{x2}$ | 2.5° | 7.5° | – |
|  | $\theta_{y2}$ | 2.5° | 7.5° | – |
|  | $\gamma_5$ | 90° | 90° | – |
|  | SCANNING RANGE | −10° TO −5° +5° TO +10° | −10° TO −5° +5° TO +10° | −10° TO −5° +5° TO +10° |
|  | FRAME RATE | 20fps | 20fps | 18.6fps |
|  | RESOLUTION | 0.3° | 0.5° | 0.085° |

FIG. 11

ANGLE

10.0

0

−10.0

TIME

# FIG. 12

FIG. 13

EP 4 254 042 A1

# FIG. 14

# FIG. 15

# FIG. 16

EP 4 254 042 A1

# FIG. 17

27

Europäisches
Patentamt

European
Patent Office

Office européen
des brevets

# EUROPEAN SEARCH REPORT

**Application Number**

EP 23 15 8399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 564 726 A1 (MURATA MANUFACTURING CO [JP]) 6 November 2019 (2019-11-06) * paragraph [0050]; figures 1-7 * | 1-6 | INV. G02B26/10 |
| A | US 2021/405350 A1 (NAONO TAKAYUKI [JP]) 30 December 2021 (2021-12-30) * paragraphs [0165] - [0198]; figures 1-11 * | 1-6 | |
| A | US 2012/044555 A1 (WANG YU-JEN [TW] ET AL) 23 February 2012 (2012-02-23) * figures 1-6 * | 1-6 | |
| A | US 2008/239252 A1 (KONNO KENJI [JP] ET AL) 2 October 2008 (2008-10-02) * figures 8-11 * | 1 | |
| A | EP 3 767 367 A1 (MITSUBISHI ELECTRIC CORP [JP]) 20 January 2021 (2021-01-20) * figures 25-29 * | 1 | |

**TECHNICAL FIELDS SEARCHED (IPC)**

G02B

The present search report has been drawn up for all claims

| Place of search | Date of completion of the search | Examiner |
|---|---|---|
| Munich | 9 August 2023 | Baur, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 8399

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| EP 3564726 | A1 | 06-11-2019 | EP | 3564726 A1 | 06-11-2019 |
| | | | JP | 6870699 B2 | 12-05-2021 |
| | | | JP | 2019207402 A | 05-12-2019 |
| | | | US | 2019339514 A1 | 07-11-2019 |
| US 2021405350 | A1 | 30-12-2021 | CN | 113574007 A | 29-10-2021 |
| | | | EP | 3950572 A1 | 09-02-2022 |
| | | | JP | 7237146 B2 | 10-03-2023 |
| | | | JP | WO2020195385 A1 | 01-10-2020 |
| | | | US | 2021405350 A1 | 30-12-2021 |
| | | | WO | 2020195385 A1 | 01-10-2020 |
| US 2012044555 | A1 | 23-02-2012 | TW | 201209446 A | 01-03-2012 |
| | | | US | 2012044555 A1 | 23-02-2012 |
| | | | US | 2012200902 A1 | 09-08-2012 |
| | | | US | 2013057936 A1 | 07-03-2013 |
| US 2008239252 | A1 | 02-10-2008 | JP | 5318359 B2 | 16-10-2013 |
| | | | JP | 2008249797 A | 16-10-2008 |
| | | | US | 2008239252 A1 | 02-10-2008 |
| EP 3767367 | A1 | 20-01-2021 | CN | 111819486 A | 23-10-2020 |
| | | | EP | 3767367 A1 | 20-01-2021 |
| | | | JP | 6789438 B2 | 25-11-2020 |
| | | | JP | WO2019176204 A1 | 08-10-2020 |
| | | | US | 2021011282 A1 | 14-01-2021 |
| | | | WO | 2019176204 A1 | 19-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017173622 A